# EUROPEAN PATENT APPLICATION

(11) **EP 3 917 026 A1**
(43) Date of publication of application: **01.12.2021**
(21) Application number: 20773368.4
(22) Date of filing: 13.03.2020
(51) Int. Cl.: H04B 7/06

(54) **METHOD AND APPARATUS FOR GENERATING WAVE BEAM**

(30) Priority: 15.03.2019 CN 201910199007
(71) Applicant: Huawei Technologies Co., Ltd., Longgang District, Shenzhen, Guangdong 518129, (CN)
(72) Inventor: ZHU, Xudong, Shenzhen, Guangdong 518129 (CN); QIN, Boya, Shenzhen, Guangdong 518129 (CN); ZHU, Youtuan, Shenzhen, Guangdong 518129 (CN)
(74) Representative: Pfenning, Meinig & Partner mbB
(86) International application number: PCT/CN2020/079106
(87) International publication number: WO 2020/187135

(57) **Abstract**

This application provides a beam generation method and an apparatus, to help improve precision of estimating a spatial direction of a terminal device. The method includes: A network device determines whether spatial directions of N beams converge to a spatial direction of a terminal device, where N is an integer greater than or equal to 3; and generates a data transmission beam when the spatial directions of the N beams converge to the spatial direction of the terminal device, where the data transmission beam is capable of being aligned with a center of coverage of the N beams, and that the spatial directions of the N beams converge to the spatial direction of the terminal device means that measurement results of the N beams meet a preset condition.

## Description

This application claims priority to Chinese Patent Application No. 201910199007.3, filed with the China National Intellectual Property Administration on March 15, 2019 and entitled "BEAM GENERATION METHOD AND APPARATUS", which is incorporated herein by reference in its entirety.

### TECHNICAL FIELD

This application relates to the communications field, and more specifically, to a beam generation method and an apparatus.

### BACKGROUND

An above-6 GHz millimeter wave (millimeter wave, mmWave) frequency band is introduced to new radio (new radio, NR). Common frequencies include 28 GHz, 39 GHz, 60 GHz, and the like. Currently, the mmWave frequency band is used in wireless mobile communication. A short wavelength results in fast signal attenuation when a signal propagates in space. In addition, an mmWave antenna has a small size (where the size of the antenna is in direct proportion to the wavelength). To use the advantage, an antenna array is usually used on a base station (base station, BS) side for beamforming (beamforming, BF), so that energy of signals is converged in space, and the signals precisely point to a direction of user equipment (user equipment, UE), thereby improving a received signal-to-noise ratio (signal-to-noise ratio, SNR) of the UE. To improve coverage and a capacity of the mmWave frequency band, a BS continually expands an array size and increases a quantity of antennas. Correspondingly, coverage of formed beams in horizontal and vertical directions becomes smaller. In typical three-sector coverage, one sector usually needs to cover an area that is horizontal 120°and vertical 30°. A cell-level broadcast channel is covered by a few wide beams, and a user-level data channel is covered by more narrow beams.

The BS polls a broadcast channel by using different wide beams. The UE selects an optimal wide beam based on the broadcast channel and feeds back an ID to the BS. The BS sweeps the UE by using N narrow beams corresponding to the optimal wide beam (where coverage of the N narrow beams includes coverage of the optimal wide beam). The UE measures RSRPs of the narrow beams, and reports measurement results to a network device, so that the network device generates corresponding beams to align with a spatial direction of the UE. If the UE is located between two narrow beams, RSRP values, of the narrow beams, obtained by the UE through measurement may be easily affected by a factor such as a measurement error, noise, or interference. As a result, the network device inaccurately estimates a spatial direction of a terminal device. Consequently, precision in this manner in a current technology is not sufficiently accurate, and a direction of the UE cannot be accurately estimated.

### SUMMARY

This application provides a beam generation method and an apparatus. It is determined whether spatial directions of N beams converge to a spatial direction of a terminal device, and a beam is generated when convergence occurs, to help improve precision of estimating the spatial direction of the terminal device.

According to a first aspect, a beam generation method is provided. The method includes: A network device determines whether spatial directions of N beams converge to a spatial direction of a terminal device, where N is an integer greater than or equal to 3; and generates a data transmission beam when the spatial directions of the N beams converge to the spatial direction of the terminal device, where the data transmission beam is capable of being aligned with a center of coverage of the N beams, and that the spatial directions of the N beams converge to the spatial direction of the terminal device means that measurement results of the N beams meet a preset condition.

Optionally, that the spatial directions of the N beams converge to the spatial direction of the terminal device may be understood as that the measurement results of the N beams on a terminal device side meet the preset condition.

Optionally, the network device may receive the measurement results of the N beams from the terminal device.

In a possible implementation, the method further includes: adjusting the N beams when the spatial directions of the N beams do not converge to the spatial direction of the terminal device. Herein, if the network device determines that the spatial directions of the N beams do not converge to the spatial direction of the terminal device, the network device may adjust the N beams until convergence occurs.

Optionally, the preset condition is that reference signal received power RSRP values of the N beams are equal. Herein, the network device may determine, based on the RSRP values of the beams, whether the spatial directions of the N beams converge to the spatial direction of the terminal device. If the RSRP values of the N beams are equal, it is considered that the spatial directions of the N beams converge to the spatial direction of the terminal device.

Optionally, the measurement results further include a reference signal received power RSRP value of each beam in the N beams and/or identification information of each beam in the N beams.

In a possible implementation, that the network device adjusts the N beams includes: The network device adjusts the spatial directions and/or beam ranges of the N beams. Herein, the network device may adjust the spatial directions and/or the beam ranges of the N beams, to improve a beam gain and align with the spatial direction of the terminal device.

In a possible implementation, the method further includes: The network device obtains, based on preset time, N narrow beams capable of covering coverage of a first wide beam. Herein, actually, in a possible case, an optimal wide beam of the terminal device does not change, but the spatial direction of the terminal device may suddenly jump out of the coverage of the current N beams. For example, the terminal device is blocked by an obstacle such as a pedestrian, a vehicle, or a building. To cope with this case, preset time (or referred to as algorithm restart time) may be set. After the preset time arrives, the network device re-obtains N beams, and the obtained N beams re-cover the coverage of the optimal wide beam (namely, the first wide beam).

In a possible implementation, the method further includes: The network device obtains N updated beams, where a wide beam on which the N updated beams are located is different from a wide beam on which the N beams are located. Herein, if the optimal wide beam of the terminal device changes, the network device needs to re-obtain the N updated beams. The N updated beams cover the optimal wide beam changed by the terminal device.

According to a second aspect, a beam generation method is provided. The method includes: A terminal device measures N beams, where N is an integer greater than or equal to 3. The terminal device sends measurement results of the N beams to a network device, where the measurement results include a parameter used to estimate a spatial direction of the terminal device, the measurement results are used by the network device to determine whether spatial directions of the N beams converge to the spatial direction of the terminal device, and that the spatial directions of the N beams converge to the spatial direction of the terminal device means that measurement results of the N beams meet a preset condition. Therefore, the terminal device reports the measurement results of the N beams to the network device. This helps the network device determine whether the spatial directions of the N beams converge to the spatial direction of the terminal device.

Optionally, the preset condition is that reference signal received power RSRP values of the N beams are equal.

Optionally, the measurement results further include a reference signal received power RSRP value of each beam in the N beams and/or identification information of each beam in the N beams.

In a possible implementation, the method further includes: The terminal device determines N updated beams, where a wide beam on which the N updated beams are located is different from a wide beam on which the N beams are located. The terminal device sends the N updated beams to the network device. Herein, if an optimal wide beam of the terminal device changes, the terminal device may determine the N updated beams, and send the N updated beams to the network device. In this way, the network device tracks the spatial direction of the terminal device by using the N updated beams.

According to a third aspect, a communications apparatus is provided. The communications apparatus includes modules configured to perform the method in any one of the first aspect or the possible implementations of the first aspect, or modules configured to perform the method in any one of the second aspect or the possible implementations of the second aspect.

According to a fourth aspect, a communications apparatus is provided. The communications apparatus may be the network device in the foregoing method designs, or may be a chip disposed in the network device. The communications apparatus includes a processor that is coupled to a memory, and the processor may be configured to execute instructions in the memory, to implement the method performed by the network device in any one of the first aspect and the possible implementations of the first aspect. Optionally, the communications apparatus further includes the memory. Optionally, the communications apparatus further includes a communications interface. The processor is coupled to the communications interface.

When the communications apparatus is the network device, the communications interface may be a transceiver or an input/output interface.

When the communications apparatus is the chip disposed in the network device, the communications interface may be an input/output interface.

Optionally, the transceiver may be a transceiver circuit. Optionally, the input/output interface may be an input/output circuit.

According to a fifth aspect, a communications apparatus is provided. The communications apparatus may be the terminal device in the foregoing method designs, or may be a chip disposed in the terminal device. The communications apparatus includes a processor that is coupled to a memory, and the processor may be configured to execute instructions in the memory, to implement the method performed by the terminal device in any one of the second aspect and the possible implementations of the second aspect. Optionally, the communications apparatus further includes the memory. Optionally, the communications apparatus further includes a communications interface. The processor is coupled to the communications interface.

When the communications apparatus is the terminal device, the communications interface may be a transceiver or an input/output interface.

When the communications apparatus is the chip disposed in the terminal device, the communications interface may be an input/output interface.

Optionally, the transceiver may be a transceiver circuit. Optionally, the input/output interface may be an input/output circuit.

According to a sixth aspect, a program is provided. The program is executed by a processor to perform the method in any one of the first aspect, the second aspect, or the possible implementations of the first aspect or the second aspect.

According to a seventh aspect, a program product is provided. The program product includes program code. When the program code is run by a communications unit and a processing unit, or a transceiver and a processor of a communications apparatus (for example, a network device), the communications apparatus is enabled to perform the method according to any one of the first aspect and the possible implementations of the first aspect.

According to an eighth aspect, a program product is provided. The program product includes program code. When the program code is run by a communications unit and a processing unit, or a transceiver and a processor of a communications apparatus (for example, a terminal device), the communications apparatus is enabled to perform the method according to any one of the second aspect and the possible implementations of the second aspect.

According to a ninth aspect, a computer-readable storage medium is provided. The computer-readable storage medium stores a program, and the program enables a communications apparatus (for example, a network device) to perform the method according to any one of the first aspect and the possible implementations of the first aspect.

According to a tenth aspect, a computer-readable storage medium is provided. The computer-readable storage medium stores a program, and the program enables a communications apparatus (for example, a terminal device) to perform the method according to any one of the second aspect and the possible implementations of the second aspect.

### BRIEF DESCRIPTION OF DRAWINGS

FIG. 1 is a schematic diagram of a wide beam and a narrow beam;
FIG. 2 is a schematic flowchart of a beam generation method according to an embodiment of this application;
FIG. 3 is a schematic diagram of a specific example to which a beam generation method according to an embodiment of this application is applied;
FIG. 4 is a schematic diagram of another specific example to which a beam generation method according to an embodiment of this application is applied;
FIG. 5 is a schematic diagram of a case in which a spatial direction of a terminal device jumps;
FIG. 6 is a schematic diagram of a case in which a wide beam of a terminal device jumps;
FIG. 7 is a diagram of simulation results in different solutions when a speed of a terminal device is 20 kmph;
FIG. 8 shows simulation results in different solutions when a speed of a terminal device is 30 kmph;
FIG. 9 shows simulation results in different solutions when a speed of a terminal device is 40 kmph;
FIG. 10 shows simulation results in different solutions when a speed of a terminal device is 60 kmph;
FIG. 11 is a schematic block diagram of a beam generation apparatus according to an embodiment of this application;
FIG. 12 is a schematic structural diagram of a beam generation apparatus according to an embodiment of this application;
FIG. 13 is a schematic block diagram of a beam generation apparatus according to another embodiment of this application; and
FIG. 14 is a schematic structural diagram of a beam generation apparatus according to another embodiment of this application.

### DESCRIPTION OF EMBODIMENTS

The following describes technical solutions of this application with reference to the accompanying drawings.

The technical solutions of embodiments of this application may be used in various communications systems, such as a global system for mobile communications (global system for mobile communications, GSM) system, a code division multiple access (code division multiple access, CDMA) system, a wideband code division multiple access (wideband code division multiple access, WCDMA) system, a general packet radio service (general packet radio service, GPRS) system, a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a worldwide interoperability for microwave access (worldwide interoperability for microwave access, WiMAX) communications system, a 5th generation (5th generation, 5G) system, or a new radio (new radio, NR) system.

A terminal device in the embodiments of this application may be user equipment, an access terminal, a subscriber unit, a subscriber station, a mobile station, a mobile console, a remote station, a remote terminal, a mobile device, a user terminal, a terminal, a wireless communications device, a user agent, or a user apparatus. The terminal device may alternatively be a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device, another processing device connected to a wireless modem, a vehicle-mounted device, a wearable device, a terminal device in a 5G network, a terminal device in a future evolved public land mobile network (public land mobile network, PLMN), or the like. This is not limited in the embodiments of this application.

A network device in the embodiments of this application may be a device configured to communicate with the terminal device. The network device may be a base transceiver station (base transceiver station, BTS) in the global system for mobile communications (global system for mobile communications, GSM) system or the code division multiple access (code division multiple access, CDMA) system, a NodeB (NodeB, NB) in the wideband code division multiple access (wideband code division multiple access, WCDMA) system, an evolved NodeB (evolved NodeB, eNB or eNodeB) in the LTE system, or a radio controller in a cloud radio access network (cloud radio access network, CRAN) scenario. The network device may alternatively be a relay node, an access point, a vehicle-mounted device, a wearable device, a network device in the 5G network, a network device in the future evolved PLMN network, or the like. This is not limited in the embodiments of this application.

In the embodiments of this application, the terminal device or the network device includes a hardware layer, an operating system layer running above the hardware layer, and an application layer running above the operating system layer. The hardware layer includes hardware such as a central processing unit (central processing unit, CPU), a memory management unit (memory management unit, MMU), and a memory (also referred to as a main memory). An operating system may be any one or more types of computer operating systems, for example, a Linux operating system, a Unix operating system, an Android operating system, an iOS operating system, or a Windows operating system, that implement service processing by using a process (process). The application layer includes applications such as a browser, an address book, word processing software, and instant messaging software. In addition, a specific structure of an execution body of a method provided in the embodiments of this application is not specifically limited in the embodiments of this application provided that a program that records code for the method provided in the embodiments of this application can be run to perform communication according to the method provided in the embodiments of this application. For example, the execution body of the method provided in the embodiments of this application may be the terminal device, the network device, or a function module that is in the terminal device or the network device and that can invoke and execute the program.

In addition, aspects or features of this application may be implemented as a method, an apparatus, or a product that uses standard programming and/or engineering technologies. The term "product" used in this application covers a computer program that can be accessed from any computer-readable component, carrier or medium. For example, a computer-readable medium may include but is not limited to: a magnetic storage component (for example, a hard disk, a floppy disk, or a magnetic tape), an optical disc (for example, a compact disc (compact disc, CD) or a digital versatile disc (digital versatile disc, DVD)), or a smart card and a flash memory component (for example, an erasable programmable read-only memory (erasable programmable read-only memory, EPROM), a card, a stick, or a key drive). In addition, various storage media described in this specification may indicate one or more devices and/or other machine-readable media that are configured to store information. The term "machine-readable media" may include but is not limited to a radio channel, and various other media that can store, contain, and/or carry instructions and/or data.

For ease of understanding, the following briefly describes terms or concepts that may be used in the embodiments of this application.

Beam (beam): The beam is a communication resource. The beam may be a wide beam, a narrow beam, or a beam of another type. A technology for forming the beam may be a beamforming technology or another technology. The beamforming technology may be specifically a digital beamforming technology, an analog beamforming technology, or a hybrid digital/analog beamforming technology. Different beams may be considered as different resources. Same information or different information may be sent on the different beams. Optionally, a plurality of beams having a same communication feature or similar communication features may be considered as one beam. One beam may include one or more antenna ports, configured to transmit a data channel, a control channel, a sounding signal, and the like. For example, a transmit beam may be distribution of signal strength formed in different directions in space after a signal is transmitted by using an antenna, and a receive beam may be distribution of signal strength, in different directions in space, of a radio signal received from an antenna. It may be understood that the one or more antenna ports forming one beam may also be considered as one antenna port set. In a protocol, the beam can also be embodied as a spatial filter (spatial filter).

Beam quality: The beam quality may be measured by using a measurement indicator such as a reference signal received power (reference signal received power, RSRP), a block error rate (block error rate, BLER), a reference signal received quality (reference signal received quality, RSRQ), a reference signal received strength indicator (received signal strength indicator, RSSI), a signal to interference plus noise ratio (signal to interference and noise ratio, SINR), a signal quality indicator (channel quality indicator, CQI), and correlation. It should be understood that a beam quality measurement indicator is not limited in the embodiments of this application.

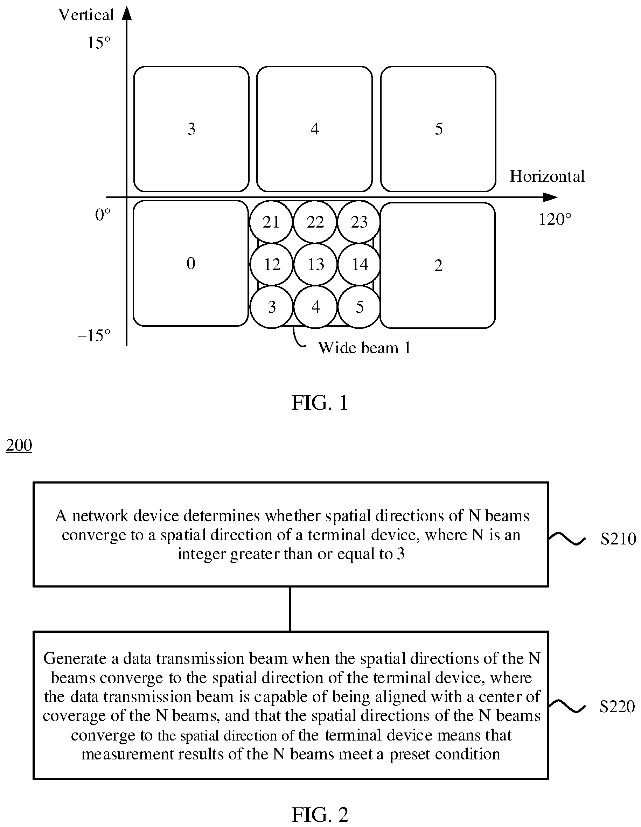

FIG. 1 is a schematic diagram of a wide beam and a narrow beam. As shown in FIG. 1, a sector may be covered by six wide beams (a wide beam 0 to a wide beam 5) in FIG. 1. The sector needs to cover an area that is horizontal 120° and vertical 30°. A broadcast channel of a network device is carried on the wide beam, and periodic sweeping is performed. A terminal device may select, from the broadcast channel, an optimal wide beam, for example, the wide beam 1. The network device allocates M narrow beams to the optimal wide beam selected by the terminal device. For example, M = 9. As shown in FIG. 1, numbers of nine narrow beams are respectively {3, 4, 5, 12, 13, 14, 21, 22, 23}, and total coverage of the nine narrow beams includes coverage of the optimal wide beam. The terminal device may compare reference signal received powers RSRPs corresponding to the M narrow beams, to determine an optimal narrow beam, and feed back an ID to the network device.

To accurately estimate a spatial direction of the terminal device and implement a maximum beam gain, the embodiments of this application provide a beam generation method. It is determined whether spatial directions of N beams converge to the spatial direction of the terminal device. Then, a data transmission beam is generated when the spatial directions of the N beams converge to the spatial direction of the terminal device. This helps improve precision of estimating the spatial direction of the terminal device. The beam generation method according to the embodiments of this application is to be described in detail below with reference to FIG. 2 to FIG. 10.

FIG. 2 is a schematic flowchart of a beam generation method 200 according to an embodiment of this application. As shown in FIG. 2, the method 200 includes the following steps.

S210: A network device determines whether spatial directions of N beams converge to a spatial direction of a terminal device, where N is an integer greater than or equal to 3.

Herein, the N beams are N narrow beams, and coverage of the N narrow beams includes a range of an optimal wide beam selected by the terminal device. Specifically, the terminal device measures beam quality (for the beam quality, refer to the foregoing descriptions) of each beam in the N beams, for example, measures an RSRP value of the beam, to obtain measurement results of the N beams. The terminal device may report the measurement results of the N beams to the network device. Herein, the measurement results of the N beams may include a measurement result (or referred to as a sweeping result) of each beam in the N beams. Optionally, the measurement results may include a parameter used to estimate the spatial direction of the terminal device. Optionally, the parameter used to estimate the spatial direction of the terminal device may include parameters such as an angle of departure (angle of departure, AOD), an angle of arrival (angle of arrival, AOA), a radiation angle, a horizontal angle, and a vertical angle.

Optionally, the measurement results further include the RSRP value of the beam and/or identification information (ID) of the beam. The network device may determine, based on the measurement results that are of the N beams and that are reported by the terminal device, whether the spatial directions of the N beams converge to the spatial direction of the terminal device.

S220: Generate a data transmission beam when the spatial directions of the N beams converge to the spatial direction of the terminal device, where the data transmission beam is capable of being aligned with a center of coverage of the N beams, and that the spatial directions of the N beams converge to the spatial direction of the terminal device means that the measurement results of the N beams meet a preset condition.

Herein, that the spatial directions of the N beams converge to the spatial direction of the terminal device may be understood as that the measurement results of the N beams on a terminal device side meet the preset condition.

Optionally, the preset condition may include: RSRP values of the N beams are equal. Specifically, the network device may determine, based on the RSRP values of the N beams, whether the spatial directions of the N beams converge to the spatial direction of the terminal device. If the RSRP values of the N beams are all equal, it is considered that the spatial directions of the N beams converge to the spatial direction of the terminal device; or if RSRP values of at least two beams in the RSRP values of the N beams are not equal, it is considered that the spatial directions of the N beams do not converge to the spatial direction of the terminal device. Herein, it is assumed that the RSRP values of the N beams are equal.

For unified description herein, a person skilled in the art may understand: That the RSRP values of the N beams are equal means that the RSRP values of the beams are equal under a given degree of measurement precision. Certainly, the measurement precision may be selected based on an actual situation. For example, if quantization precision of the RSRP is 1 decibel (dB), and the RSRP values of the N beams are the same under this precision, it is considered that the spatial directions of the N beams converge to the spatial direction of the terminal device. If the spatial directions of the N beams converge to the spatial direction of the terminal device, the center of the coverage corresponding to the data transmission beam generated by the network device based on the N beams coincides with a center of the spatial direction of the terminal device. Alternatively, whether the RSRP values of the beams are equal may be measured by using an RSRP difference between the beams. If the RSRP difference between the beams tends to be infinitely small, it may also be considered that the RSRP values of the beams are equal.

Optionally, the preset condition may include: An RSRP difference between every two beams in the N beams meets a preset difference, where the preset difference may be determined based on an actual situation. Specifically, the preset difference may be sufficiently small. If the RSRP difference between every two beams is less than or equal to the preset difference, it may be considered that the preset condition is met.

If the spatial directions of the N beams do not converge to the spatial direction of the terminal device, the N beams need to be adjusted. Optionally, the method 200 further includes: adjusting the N beams when the spatial directions of the N beams do not converge to the spatial direction of the terminal device.

Specifically, if the network device determines that the spatial directions of the N beams do not converge to the spatial direction of the terminal device, the network device needs to adjust the N beams, so that spatial directions of N adjusted beams can finally converge to the spatial direction of the terminal device. It should be noted that, if the network device determines, based on the measurement results, that the spatial directions of the N beams do not converge to the spatial direction of the terminal device, the network device may continually perform the foregoing process, that is, re-obtain the measurement results of the N beams, and continually perform adjustment until the spatial directions of the N beams converge to the spatial direction of the terminal device. Therefore, in this embodiment of this application, the network device may perform user-level beam precise alignment and motion tracking by using a fixed quantity of dynamic beams.

Optionally, that the network device adjusts the N beams includes: The network device adjusts the spatial directions and/or beam ranges of the N beams. The network device adjusts the spatial directions (which may be understood as angles in two-dimensional space, for example, angles of departure or angles of arrival) of the N beams to align with an estimated spatial direction of the terminal device and/or narrow the beam ranges (or widths) of the N beams, thereby improving a beam gain. Narrowing a range of a beam may be understood as concentrating more energy of the beam at an angle. Herein, the network device adjusts the spatial directions and/or the beam widths of the beams by using the sweeping results fed back by the terminal device, to narrow the beam ranges to a narrowest beam (corresponding to a highest gain) of the network device.

The network device may estimate the spatial direction of the terminal device by using an interpolation algorithm. For example, the interpolation algorithm may be a "sum and difference beam angle measurement" algorithm in a radar field. It should be understood that a person skilled in the art may estimate the spatial direction of the terminal device by using the interpolation algorithm, or may estimate the spatial direction of the terminal device by using another appropriate algorithm. This is not limited in this embodiment of this application. In addition, the interpolation algorithm is an existing classical algorithm. For brevity, the interpolation algorithm is not specifically described in this embodiment of this application.

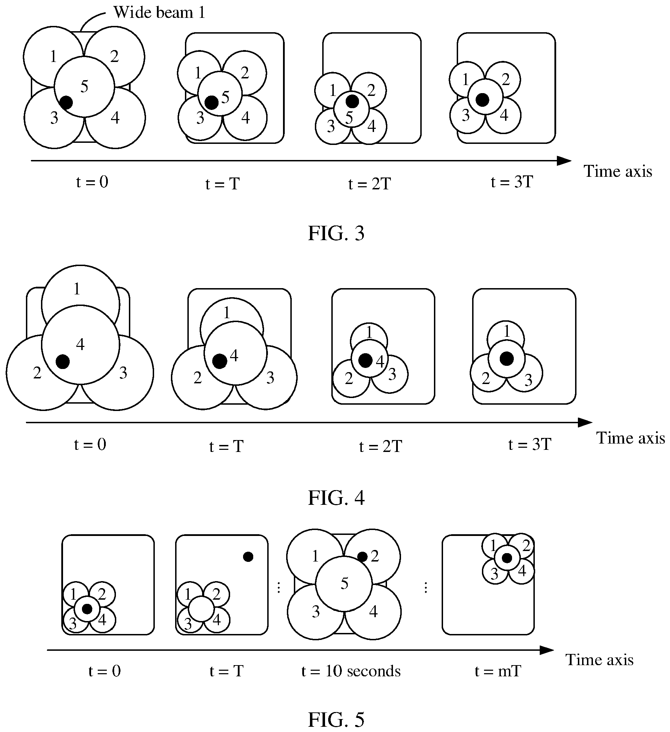

To help a person skilled in the art understand the beam generation method according to the embodiments of this application, the following provides description with reference to a specific example in FIG. 3.

N = 4 is used as an example. It is assumed that an optimal wide beam of the terminal device is 1. As shown in FIG. 3, total coverage of four narrow beams includes coverage of the wide beam 1. FIG. 3 shows an example of four narrow beams in different time periods.

When t = 0, the network device covers the optimal wide beam 1 by using the four narrow beams, to generate a data transmission beam of the four narrow beams, where the data transmission beam is aligned with a center of the coverage of the four narrow beams. In this case, the center of the data transmission beam does not coincide with a black circle. The black circle in FIG. 3 is the spatial direction, of the terminal device, estimated by the network device.

When t = T, the terminal device feeds back, to the network device, sweeping results of the four beams at a moment t = 0. For example, RSRP of a beam 3 > RSRP of a beam 1 (or RSRP of a beam 4) > RSRP of a beam 2, where the RSRPs are fed back by the terminal device. The network device may estimate the spatial direction of the terminal device based on the sweeping results of the four beams at the moment t = 0. The network device may shift the spatial directions of the four beams to a lower left corner based on the spatial direction of the terminal device, and narrow beam ranges (that is, increase a beam gain). It can be learned from FIG. 3 that, compared with t = 0, when t = T, the center of the data transmission beam is closer to the black circle.

When t = 2T, the terminal device feeds back, to the network device, the sweeping results of the four beams at a moment t = T. The network device may estimate the spatial direction of the terminal device based on the sweeping results of the four beams at the moment t = T, and then continue to adjust the spatial directions of the four beams based on the spatial direction of the terminal device.

When t = 3T, the terminal device feeds back, to the network device, the sweeping results of the four beams at a moment t = 2T. For example, the RSRPs, of the beam 1 to the beam 4, fed back by the terminal device are equal, and the data transmission beam has a highest RSRP. It can be learned from FIG. 3 that, when t = 3T, the center of the data transmission beam already coincides with a center of the black circle. This indicates that the spatial directions of the four beams have converged to the spatial direction of the terminal device.

It should be understood that four narrow beams are used as an example for description, and this does not constitute a limitation on this embodiment of this application. Actually, another quantity of narrow beams may alternatively be adjusted by using a beam generation method according to the embodiments of this application. For example, FIG. 4 shows a case in which there are three narrow beams. It can be learned that the four narrow beams in FIG. 3 also finally converge to the spatial direction of the terminal device. It should be understood that a process of adjusting the three narrow beams in FIG. 4 may be similar to an adjustment process in FIG. 3. For brevity, details are not described herein again.

It should be further understood that the foregoing example is described only by using time periods t = 0 to t = 3T as an example, and does not constitute a limitation on this embodiment of this application. Actually, if the N beams do not converge to the spatial direction of the terminal device, the network device may continually perform adjustment until convergence occurs.

It should be further understood that the examples in FIG. 3 and FIG. 4 are provided merely to help a person skilled in the art understand the embodiments of this application, instead of limiting the embodiments of this application to specific scenarios shown in the examples. Clearly, a person skilled in the art can make various equivalent modifications or changes according to the examples shown in FIG. 3 and FIG. 4, and such modifications or changes also fall within the scope of the embodiments of this application.

Actually, in a possible case, the optimal wide beam of the terminal device does not change, but the spatial direction of the terminal device may suddenly jump out of the coverage of the current N beams. For example, the terminal device is blocked by an obstacle such as a pedestrian, a vehicle, or a building. To cope with this case, preset time (or referred to as algorithm restart time) may be set. After the preset time arrives, the network device re-obtains N beams, and the obtained N beams re-cover the coverage of the optimal wide beam. Herein, after re-obtaining the N beams, the network device may continue to perform the foregoing method, to adjust the N beams, so that spatial directions of the N beams converge to the spatial direction of the terminal device. Details are not described herein again. Optionally, the method 200 further includes: The network device obtains, based on the preset time, N beams capable of covering a first wide beam. The first wide beam represents the optimal wide beam of the terminal device.

Herein, the preset time may be absolute time (for example, implemented by a timer), or may be relative time. This is not limited. Optionally, the preset time may be determined by the network device based on a system parameter such as a frame structure and beam sweeping time. When the preset time arrives, the network device re-obtains the N beams.

FIG. 5 shows a case in which a spatial direction of a terminal device jumps. As shown in FIG. 5, when t = 0, spatial directions of four beams converge to the spatial direction of the terminal device. When t = T, the spatial direction of the terminal device suddenly jumps out of coverage of the current four beams. In this case, the four beams cannot converge to the spatial direction of the terminal device. After preset time is set, for example, set to the 10^{th} second, the network device may re-obtain four beams at the 10^{th} second, to cover coverage of an optimal wide beam. The network device may adjust the four beams from the 10^{th} second. For example, when t = mT, the four beams re-converge to the spatial direction of the terminal device.

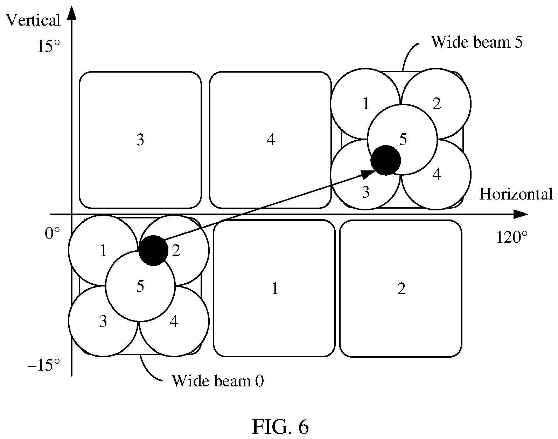

Actually, in another possible case, the optimal wide beam of the terminal device changes. For example, a direct path of the terminal device is suddenly blocked by an obstacle such as a pedestrian, a vehicle, or a building, and the terminal device is switched to a reflection path. For example, as shown in FIG. 6, the terminal device jumps from a wide beam 0 to a wide beam 5. To cope with this case, the network device needs to re-obtain N updated beams. Herein, after obtaining the N updated beams, the network device may continue to perform the foregoing method, so that spatial directions of the N updated beams converge to the spatial direction of the terminal device. Details are not described herein again. Optionally, the method 200 further includes: The network device obtains the N updated beams, where coverage of the N updated beams is different from the coverage of the N beams.

In other words, when the spatial directions of the N beams have converged to the spatial direction of the terminal device, if the optimal wide beam of the terminal device changes, the network device needs to enlarge the beam widths, to re-obtain the N updated beams. The N updated beams can cover coverage of the wide beams updated by the terminal device. The network device re-tracks or adjusts based on the N updated beams, to obtain beams that can re-converge to the spatial direction of the terminal device. Therefore, even if the terminal device jumps and the wide beam changes, the beam generation method according to the embodiments of this application is still applicable.

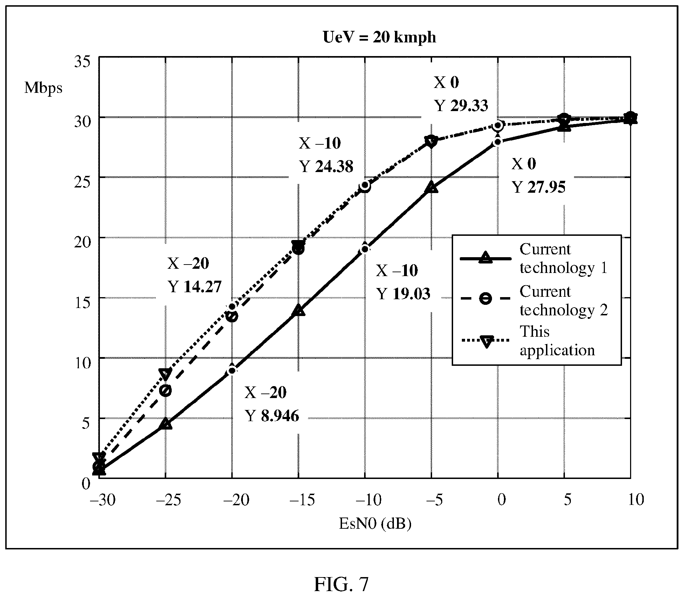

To help a person skilled in the art understand the beam generation method according to the embodiments of this application, the following describes the embodiments of this application with reference to specific simulation examples in FIG. 7 to FIG. 10. Simulation conditions are as follows: The terminal device moves horizontally 30 meters (m) in front of the network device at a speed of {20, 30, 40, 60} kilometers per hour (kmph). A periodicity in which the network device performs narrow beam sweeping is 40 milliseconds (ms). A channel is line of sight (line of sight, LOS). A horizontal coordinate X of a simulation result is a ratio of symbol energy to noise rower spectral density (ratio of symbol energy to noise rower spectral density, EsN0), and a range of the ratio of symbol energy to noise rower spectral density is [-30, 10] decibels (dB). A vertical coordinate Y of the simulation result is an average throughput rate of the terminal device in a movement track, and the average throughput rate is in a unit of megabit per second (Mbps).

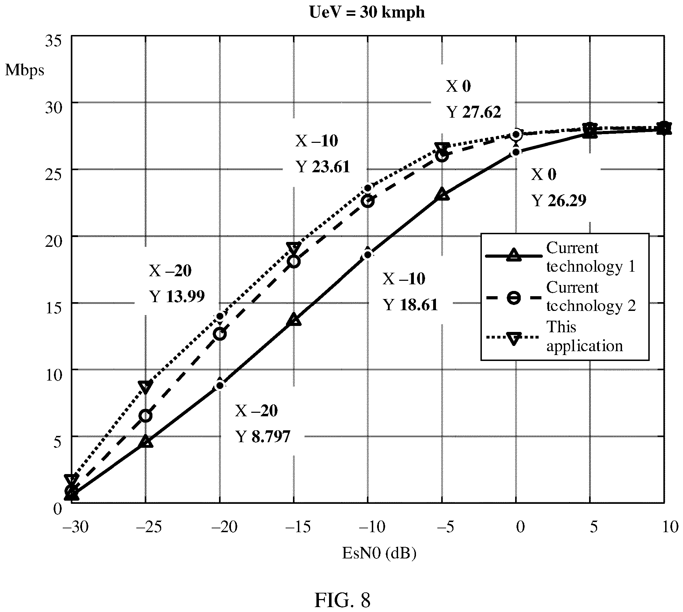

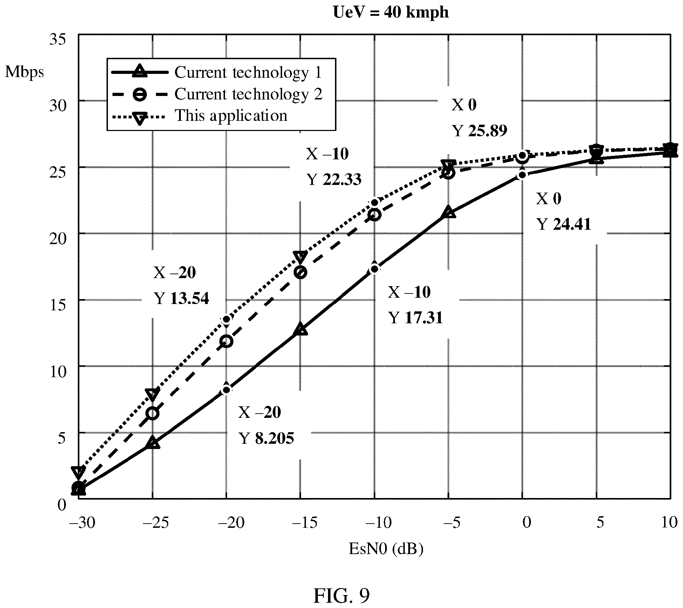

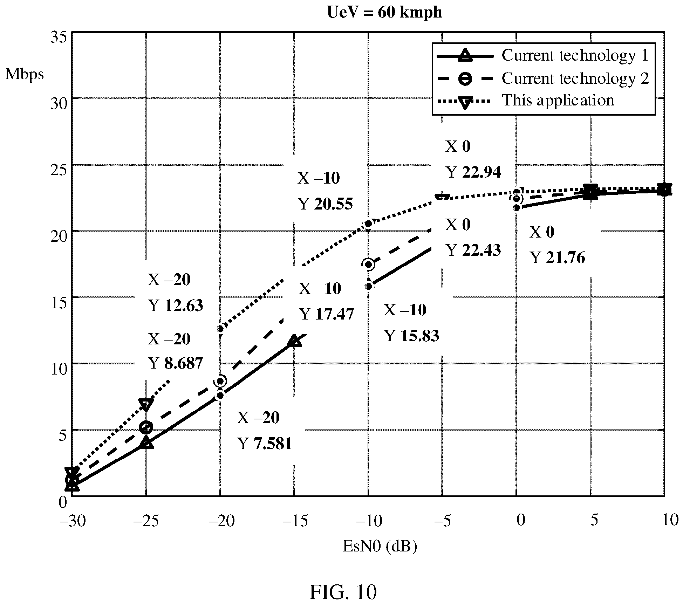

In FIG. 7 to FIG. 10: (1) For a simulation result corresponding to a current technology 1, namely, user-level narrow beam sweeping, user-level sweeping is performed by using N = 9 static narrow beams. (2) For a simulation result corresponding to a current technology 2, sweeping is performed by using N = 9 static beams. The terminal device feeds back a sweeping result. The network device performs interpolation calculation on a spatial direction of the terminal device, generates a dynamic beam, and then adds the dynamic beam to a set of beams used for next user-level sweeping. (3) For a simulation result corresponding to the embodiments of this application, sweeping is performed by using N = 4 narrow beams and a data transmission beam. FIG. 7 shows simulation results in different solutions when a speed (which may be denoted as UeV) of a terminal device is 20 kmph. FIG. 8 shows simulation results in different solutions when a speed of a terminal device is 30 kmph. FIG. 9 shows simulation results in different solutions when a speed of a terminal device is 40 kmph. FIG. 10 shows simulation results in different solutions when a speed of a terminal device is 60 kmph.

A person skilled in the art can learn from the simulation results in FIG. 7 to FIG. 10 that, the beam generation method in the embodiments of this application is better than the method in the current technology (including the current technology 1 and the current technology 2). The results in FIG. 10 are used as an example. The speed of the terminal device is 60 kmph. For the horizontal coordinate EsN0 = -10 dB, an average throughput rate corresponding to a solution in the embodiments of this application is 20.55 Mbps, an average throughput rate corresponding to a solution in the current technology 1 is 15.83 Mbps, and an average throughput rate corresponding to a solution in the current technology 2 is 17.47 Mbps. In other words, the average throughput rate in the solution in the embodiments of this application is increased by about 30% compared with that in the solution in the current technology 1, and is increased by about 18% compared with that in the solution in the current technology 2. It can be learned that, a quantity of beams used in the beam generation method in the embodiments of this application is reduced from nine to five, thereby implementing faster and more accurate beam alignment and motion tracking, enhancing user experience in a moving scenario, and improving an overall system throughput.

It should be understood that the foregoing simulation example is merely an example for description, and does not constitute a limitation on the protection scope of the embodiments of this application. Actually, a person skilled in the art may transform a parameter in the foregoing simulation example to obtain another simulation result.

It should be understood that the embodiments of this application may be independently implemented, or may be properly combined, and the explanation or description of the terms in the embodiments may be cited or explained in the embodiments. This is not limited in this application.

It should be further understood that sequence numbers of the foregoing processes do not mean execution sequences in the embodiments of this application. The execution sequences of the processes should be determined based on functions and internal logic of the processes, and should not be construed as any limitation on the implementation processes of the embodiments of this application.

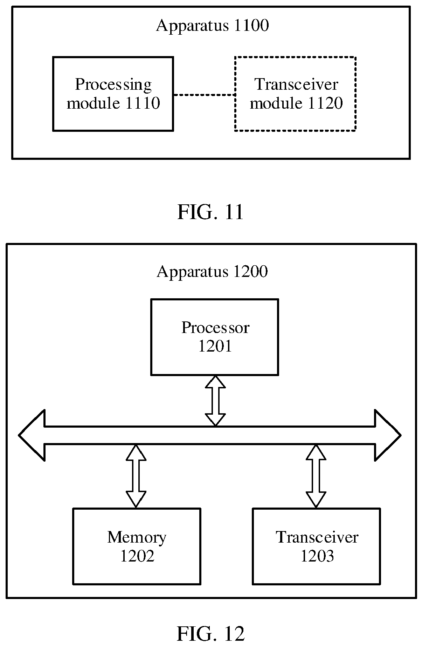

The beam generation method according to the embodiments of this application is described in detail above with reference to FIG. 1 to FIG. 10. A beam generation apparatus according to the embodiments of this application is to be described below with reference to FIG. 11 to FIG. 14. It should be understood that the technical features described in the method embodiments are also applicable to the following apparatus embodiments.

FIG. 11 is a schematic block diagram of a beam generation apparatus 1100 according to an embodiment of this application. The apparatus 1100 is configured to perform the method performed by the network device in the foregoing method embodiments. Optionally, a specific form of the apparatus 1100 may be a network device or a chip in the network device. This is not limited in this embodiment of this application. The apparatus 1100 includes:
a processing module 1110, configured to determine whether spatial directions of N beams converge to a spatial direction of a terminal device, where N is an integer greater than or equal to 3.

The processing module 1110 is further configured to generate a data transmission beam when the spatial directions of the N beams converge to the spatial direction of the terminal device, where the data transmission beam is capable of being aligned with a center of coverage of the N beams, and that the spatial directions of the N beams converge to the spatial direction of the terminal device means that measurement results of the N beams meet a preset condition.

Optionally, the processing module 1110 may invoke a transceiver module 1120 to receive the measurement results of the N beams from the terminal device.

In an optional implementation, the processing module 1110 is further configured to adjust the N beams when the spatial directions of the N beams do not converge to the spatial direction of the terminal device.

In an optional implementation, the preset condition is that reference signal received power RSRP values of the N beams are equal.

In an optional implementation, that the processing module 1110 is configured to adjust the N beams specifically includes: adjusting the spatial directions and/or beam ranges of the N beams.

In an optional implementation, the processing module 1110 is further configured to obtain, based on preset time, N narrow beams capable of covering coverage of a first wide beam. Optionally, the processing module 1110 may invoke the transceiver module 1120 to obtain IDs of the N narrow beams.

In an optional implementation, the processing module 1110 is further configured to obtain N updated beams, where a wide beam on which the N updated beams are located is different from a wide beam on which the N beams are located. Optionally, the processing module 1110 may invoke the transceiver module 1120 to obtain IDs of the N updated beams.

It should be understood that the beam generation apparatus 1100 according to this embodiment of this application may correspond to the method performed by the network device in the foregoing method embodiments, for example, the method in FIG. 2. In addition, the foregoing and other management operations and/or functions of the modules in the apparatus 1100 are separately used to implement corresponding steps of the method performed by the network device in the foregoing method embodiments. Therefore, the beneficial effects in the foregoing method embodiments can also be achieved. For brevity, details are not described herein.

It should further be understood that the modules in the apparatus 1100 may be implemented in a form of software and/or hardware. This is not specifically limited. In other words, the apparatus 1100 is presented in a form of function modules. The "module" herein may be an application-specific integrated circuit ASIC, a circuit, a processor and a memory that execute one or more software or firmware programs, an integrated logic circuit, and/or another component that can provide the foregoing functions. Optionally, in a simple embodiment, a person skilled in the art may figure out that the apparatus 1100 may be in a form shown in FIG. 12. The processing module 1110 may be implemented by using a processor 1201 shown in FIG. 12. The transceiver module 1120 may be implemented by using a transceiver 1203 shown in FIG. 12. Specifically, the processor is implemented by executing a computer program stored in the memory. Optionally, when the apparatus 1100 is a chip, a function and/or an implementation process of the transceiver module 1110 may alternatively be implemented by using a pin, a circuit, or the like. Optionally, the memory is a storage unit in the chip, for example, a register or a cache. The storage unit may alternatively be a storage unit, such as a memory 1202 shown in FIG. 12, that is in the network device and that is located outside the chip.

FIG. 12 is a schematic structural diagram of a beam generation apparatus 1200 according to an embodiment of this application. As shown in FIG. 12, the apparatus 1200 includes a processor 1201.

In a possible implementation, the processor 1201 is configured to: determine whether spatial directions of N beams converge to a spatial direction of a terminal device, where N is an integer greater than or equal to 3; and generate a data transmission beam when the spatial directions of the N beams converge to the spatial direction of the terminal device, where the data transmission beam is capable of being aligned with a center of coverage of the N beams, and that the spatial directions of the N beams converge to the spatial direction of the terminal device means that measurement results of the N beams meet a preset condition. Optionally, the processor 1201 is configured to invoke an interface to perform the following action: receiving the measurement results of the N beams from the terminal device.

It should be understood that the processor 1201 may invoke the interface to perform the foregoing receiving and sending actions. The invoked interface may be a logical interface or a physical interface. This is not limited. Optionally, the physical interface may be implemented by using a transceiver. Optionally, the apparatus 1200 further includes the transceiver 1203.

Optionally, the apparatus 1200 further includes the memory 1202, and the memory 1202 may store program code in the foregoing method embodiments, so that the processor 1201 invokes the program code.

Specifically, if the apparatus 1200 includes the processor 1201, the memory 1202, and the transceiver 1203, the processor 1201, the memory 1202, and the transceiver 1203 communicate with each other through an inner connection path, to transmit a control signal and/or a data signal. In a possible design, the processor 1201, the memory 1202, and the transceiver 1203 may be implemented by using a chip. The processor 1201, the memory 1202, and the transceiver 1203 may be implemented in a same chip, or may be separately implemented in different chips, or functions of any two of the processor 1201, the memory 1202, and the transceiver 1203 are implemented in one chip. The memory 1202 may store the program code, and the processor 1201 invokes the program code stored in the memory 1202, to implement a corresponding function of the apparatus 1200.

It should be understood that the apparatus 1200 may be further configured to perform other steps and/or operations on a network device side in the foregoing embodiments. For brevity, details are not described herein.

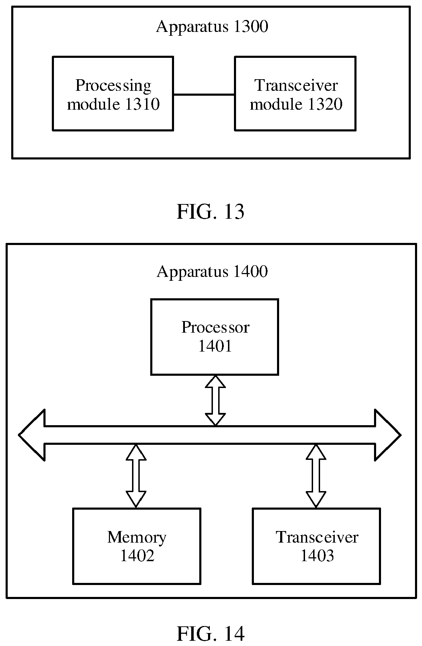

FIG. 13 is a schematic block diagram of a beam generation apparatus 1300 according to an embodiment of this application. The apparatus 1300 is configured to perform the method performed by the terminal device in the foregoing method embodiments. Optionally, a specific form of the apparatus 1300 may be a terminal device or a chip in the terminal device. This is not limited in this embodiment of this application. The apparatus 1300 includes:
a processing module 1310, configured to measure N beams, where N is an integer greater than or equal to 3; and
a transceiver module 1320, configured to send measurement results of the N beams to a network device, where the measurement results include a parameter used to estimate a spatial direction of the terminal device, the measurement results are used by the network device to determine whether spatial directions of the N beams converge to the spatial direction of the terminal device, and that the spatial directions of the N beams converge to the spatial direction of the terminal device means that the measurement results of the N beams meet a preset condition.

In an optional implementation, the preset condition is that reference signal received power RSRP values of the N beams are equal.

In an optional implementation, the measurement results further include a reference signal received power RSRP value of each beam in the N beams and/or identification information of each beam in the N beams.

In an optional implementation, the processing module 1310 is further configured to:
determine N updated beams, where a wide beam on which the N updated beams are located is different from a wide beam on which the N beams are located.

Correspondingly, the transceiver module 1320 is configured to send the N updated beams to the network device.

It should be understood that the beam generation apparatus 1300 according to this embodiment of this application may correspond to the method performed by the terminal device in the foregoing method embodiments. In addition, the foregoing and other management operations and/or functions of the modules in the apparatus 1300 are separately used to implement corresponding steps of the method performed by the terminal device in the foregoing method embodiments. Therefore, the beneficial effects in the foregoing method embodiments can also be achieved. For brevity, details are not described herein.

It should further be understood that the modules in the apparatus 1300 may be implemented in a form of software and/or hardware. This is not specifically limited. In other words, the apparatus 1300 is presented in a form of function modules. The "module" herein may be an application-specific integrated circuit ASIC, a circuit, a processor and a memory that execute one or more software or firmware programs, an integrated logic circuit, and/or another component that can provide the foregoing functions. Optionally, in a simple embodiment, a person skilled in the art may figure out that the apparatus 1300 may be in a form shown in FIG. 14. The processing module 1310 may be implemented by using a processor 1401 shown in FIG. 14. The transceiver module 1320 may be implemented by using a transceiver 1403 shown in FIG. 14. Specifically, the processor is implemented by executing a computer program stored in the memory. Optionally, when the apparatus 1300 is a chip, a function and/or an implementation process of the transceiver module 1320 may alternatively be implemented by using a pin, a circuit, or the like. Optionally, the memory is a storage unit in the chip, for example, a register or a cache. The storage unit may alternatively be a storage unit, such as a memory 1402 shown in FIG. 14, that is in the network device and that is located outside the chip.

FIG. 14 is a schematic structural diagram of a beam generation apparatus 1400 according to an embodiment of this application. As shown in FIG. 14, the apparatus 1400 includes a processor 1401.

In a possible implementation, the processor 1401 is configured to measure N beams, where N is an integer greater than or equal to 3. The processor 1401 is configured to invoke an interface to perform the following action: sending measurement results of the N beams to a network device, where the measurement results include a parameter used to estimate a spatial direction of the terminal device, the measurement results are used by the network device to determine whether spatial directions of the N beams converge to the spatial direction of the terminal device, and that the spatial directions of the N beams converge to the spatial direction of the terminal device means that the measurement results of the N beams meet a preset condition.

It should be understood that the processor 1401 may invoke the interface to perform the foregoing receiving and sending actions. The invoked interface may be a logical interface or a physical interface. This is not limited. Optionally, the physical interface may be implemented by using a transceiver. Optionally, the apparatus 1400 further includes the transceiver 1403.

Optionally, the apparatus 1400 further includes the memory 1402, and the memory 1402 may store program code in the foregoing method embodiments, so that the processor 1401 invokes the program code.

Specifically, if the apparatus 1400 includes the processor 1401, the memory 1402, and the transceiver 1403, the processor 1401, the memory 1402, and the transceiver 1403 communicate with each other through an inner connection path, to transmit a control signal and/or a data signal. In a possible design, the processor 1401, the memory 1402, and the transceiver 1403 may be implemented by using a chip. The processor 1401, the memory 1402, and the transceiver 1403 may be implemented in a same chip, or may be separately implemented in different chips, or functions of any two of the processor 1401, the memory 1402, and the transceiver 1403 are implemented in one chip. The memory 1402 may store the program code, and the processor 1401 invokes the program code stored in the memory 1402, to implement a corresponding function of the apparatus 1400.

It should be understood that the apparatus 1400 may be further configured to perform other steps and/or operations on the terminal device side in the foregoing embodiments. For brevity, details are not described herein.

The method disclosed in the embodiments of this application may be applied to a processor, or may be implemented by a processor. The processor may be an integrated circuit chip and has a signal processing capability. In an implementation process, the steps in the foregoing method embodiments may be completed by using a hardware integrated logic circuit in the processor or an instruction in a form of software. The processor may be a general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate, a transistor logic device, a discrete hardware component, a system on chip (system on chip, SoC), a central processing unit (central processing unit, CPU), a network processor (network processor, NP), a digital signal processor (digital signal processor, DSP), a micro controller unit (micro controller unit, MCU), a programmable logic device (programmable logic device, PLD), or another integrated chip. The processor may implement or perform the methods, the steps, and logical block diagrams that are disclosed in the embodiments of this application. The general-purpose processor may be a microprocessor, or the processor may be any conventional processor or the like. The steps in the methods disclosed with reference to the embodiments of this application may be directly performed and completed through a hardware decoding processor, or may be performed and completed through a combination of hardware in the decoding processor and a software module. The software module may be located in a mature storage medium in the art, such as a random access memory, a flash memory, a read-only memory, a programmable read-only memory, an electrically erasable programmable memory, or a register. The storage medium is located in a memory, and the processor reads information in the memory and completes the steps in the foregoing methods in combination with the hardware of the processor.

It may be understood that, in the embodiments of this application, the memory may be a volatile memory or a non-volatile memory, or may include both a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through examples but not limitative descriptions, many forms of RAMs are available, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). It should be noted that the memory of the systems and methods described in this specification includes but is not limited to these memories and any memory of another proper type.

It should be understood that the term "and/or" in this specification describes only an association relationship between associated objects and represents that three relationships may exist. For example, A and/or B may represent the following three cases: Only A exists, both A and B exist, and only B exists. In addition, the character "/" in this specification usually indicates an "or" relationship between the associated objects.

A person of ordinary skill in the art may be aware that units and algorithm steps in the examples described with reference to the embodiments disclosed in this specification may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for detailed working processes of the foregoing system, apparatus, and unit, refer to corresponding processes in the foregoing method embodiments. Details are not described herein again.

In the several embodiments provided in this application, it should be understood that the disclosed system, apparatus, and method may be implemented in other manners. For example, the described apparatus embodiment is merely an example. For example, the unit division is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate. Parts displayed as units may or may not be physical units, to be specific, may be located in one position, or may be distributed on a plurality of network units. Some or all of the units may be selected based on an actual requirement to achieve the objectives of the solutions of the embodiments.

In addition, functional units in the embodiments of this application may be integrated into one processing unit, or each of the units may exist alone physically, or two or more units are integrated into one unit.

When the functions are implemented in a form of a software functional unit and sold or used as an independent product, the functions may be stored in a computer-readable storage medium. Based on such an understanding, the technical solutions of this application essentially, or the part contributing to the current technology, or some of the technical solutions may be implemented in a form of a software product. The software product is stored in a storage medium, and includes several instructions for instructing a computer device (which may be a personal computer, a server, or a network device) to perform all or some of the steps in the methods described in the embodiments of this application. The foregoing storage medium includes: any medium that can store program code, such as a USB flash drive, a removable hard disk, a read-only memory ROM, a random access memory RAM, a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A beam generation method, comprising:
determining, by a network device, whether spatial directions of N beams converge to a spatial direction of a terminal device, wherein N is an integer greater than or equal to 3; and
generating a data transmission beam when the spatial directions of the N beams converge to the spatial direction of the terminal device, wherein the data transmission beam is capable of being aligned with a center of coverage of the N beams, and that the spatial directions of the N beams converge to the spatial direction of the terminal device means that measurement results of the N beams meet a preset condition.

2. The method according to claim 1, wherein the method further comprises:
adjusting the N beams when the spatial directions of the N beams do not converge to the spatial direction of the terminal device.

3. The method according to claim 1 or 2, wherein the preset condition is that reference signal received power RSRP values of the N beams are equal.

4. The method according to claim 2 or 3, wherein the adjusting the N beams comprises:
adjusting, by the network device, the spatial directions and/or beam ranges of the N beams.

5. The method according to any one of claims 1 to 4, wherein the method further comprises:
obtaining, by the network device based on preset time, N narrow beams capable of covering coverage of a first wide beam.

6. The method according to any one of claims 1 to 5, wherein the method further comprises:
obtaining, by the network device, N updated beams, wherein a wide beam on which the N updated beams are located is different from a wide beam on which the N beams are located.

7. A beam generation method, comprising:
measuring, by a terminal device, N beams, wherein N is an integer greater than or equal to 3; and
sending, by the terminal device, measurement results of the N beams to a network device, wherein the measurement results comprise a parameter used to estimate a spatial direction of the terminal device, the measurement results are used by the network device to determine whether spatial directions of the N beams converge to the spatial direction of the terminal device, and that the spatial directions of the N beams converge to the spatial direction of the terminal device means that the measurement results of the N beams meet a preset condition.

8. The method according to claim 7, wherein the preset condition is that reference signal received power RSRP values of the N beams are equal.

9. The method according to claim 7 or 8, wherein the measurement results further comprise a reference signal received power RSRP value of each beam in the N beams and/or identification information of each beam in the N beams.

10. The method according to any one of claims 7 to 9, wherein the method further comprises:
determining, by the terminal device, N updated beams, wherein a wide beam on which the N updated beams are located is different from a wide beam on which the N beams are located; and
sending, by the terminal device, the N updated beams to the network device.

11. A network device, comprising:
a processing module, configured to determine whether spatial directions of N beams converge to a spatial direction of a terminal device, wherein N is an integer greater than or equal to 3, wherein
the processing module is further configured to generate a data transmission beam when the spatial directions of the N beams converge to the spatial direction of the terminal device, wherein the data transmission beam is capable of being aligned with a center of coverage of the N beams, and that the spatial directions of the N beams converge to the spatial direction of the terminal device means that measurement results of the N beams meet a preset condition.

12. The network device according to claim 11, wherein the processing module is further configured to:
adjust the N beams when the spatial directions of the N beams do not converge to the spatial direction of the terminal device.

13. The network device according to claim 11 or 12, wherein the preset condition is that reference signal received power RSRP values of the N beams are equal.

14. The network device according to claim 12 or 13, wherein that the processing module is configured to adjust the N beams specifically comprises:
adjusting the spatial directions and/or beam ranges of the N beams.

15. The network device according to any one of claims 11 to 14, wherein the processing module is further configured to obtain, based on preset time, N narrow beams capable of covering coverage of a first wide beam.

16. The network device according to any one of claims 11 to 15, wherein the processing module is further configured to obtain N updated beams, wherein a wide beam on which the N updated beams are located is different from a wide beam on which the N beams are located.

17. A terminal device, comprising:
a processing module, configured to measure N beams, wherein N is an integer greater than or equal to 3; and
a transceiver module, configured to send measurement results of the N beams to a network device, wherein the measurement results comprise a parameter used to estimate a spatial direction of the terminal device, the measurement results are used by the network device to determine whether spatial directions of the N beams converge to the spatial direction of the terminal device, and that the spatial directions of the N beams converge to the spatial direction of the terminal device means that the measurement results of the N beams meet a preset condition.

18. The terminal device according to claim 17, wherein the preset condition is that reference signal received power RSRP values of the N beams are equal.

19. The terminal device according to claim 17 or 18, wherein the measurement results further comprise a reference signal received power RSRP value of each beam in the N beams and/or identification information of each beam in the N beams.

20. The terminal device according to any one of claims 17 to 19, wherein the processing module is further configured to:
determine N updated beams, wherein a wide beam on which the N updated beams are located is different from a wide beam on which the N beams are located; and
correspondingly, the transceiver module is configured to send the N updated beams to the network device.

21. A communications apparatus, wherein the apparatus comprises a memory and a processor; the memory stores code and data; the memory is coupled to the processor; the processor runs the code in the memory, to enable the apparatus to perform the beam generation method according to any one of claims 1 to 6 or the beam generation method according to any one of claims 7 to 10.

22. A computer-readable storage medium, wherein the computer-readable storage medium stores instructions;
and when the instructions are executed, the beam generation method according to any one of claims 1 to 6 or the beam generation method according to any one of claims 7 to 10 is performed.

23. A computer program product comprising instructions, wherein the computer program product runs on a computer, the computer is enabled to perform the beam generation method according to any one of claims 1 to 6 or the beam generation method according to any one of claims 7 to 10.
